# FASCICULE DE BREVET EUROPEEN

(11) **EP 3 364 063 B1**
(45) Date de publication et mention de la délivrance du brevet: **08.04.2020**
(21) Numéro de dépôt: 18154166.5
(22) Date de dépôt: 30.01.2018
(51) Int. Cl.: F16D 13/74, F16D 21/06, F16D 25/0638

(54) **MECANISME A DOUBLE EMBRAYAGES COMPACT ET SYSTEME DE TRANSMISSION COMPRENANT UN TEL MECANISME A DOUBLE EMBRAYAGES**
KOMPAKTER DOPPELKUPPLUNGSMECHANISMUS, UND ÜBERTRAGUNGSSYSTEM, DAS EINEN SOLCHEN DOPPELKUPPLUNGSMECHANISMUS UMFASST
COMPACT DUAL CLUTCH MECHANISM AND TRANSMISSION SYSTEM COMPRISING SUCH A DUAL CLUTCH MECHANISM

(30) Priorité: 07.02.2017 FR 1751018
(43) Date de publication de la demande: 22.08.2018
(73) Titulaire: Valeo Embrayages, 80009 Amiens cedex 2 (FR)
(72) Inventeur: CAUMARTIN, Laurent, 80009 AMIENS (FR); CORNET, Vincent, 80009 AMIENS (FR); RIBOT, Herve, 80009 AMIENS (FR); VUAROQUEAUX, Guillaume, 80009 AMIENS (FR)
(74) Mandataire: Vincent, Catherine Marie Marguerite

(56) Documents cités:
- DE-A1-102007 008 946
- US-A1- 2013 153 355
- US-A1- 2015 240 887

## Description

### Domaine technique

La présente invention concerne un mécanisme à double embrayages compact tel qu'utilisé dans le domaine de l'automobile. L'invention concerne aussi un système de transmission intégrant un tel mécanisme à double embrayage.

### État de la technique antérieure

On connait des mécanismes d'embrayage comprenant un embrayage en rotation autour d'un axe de rotation et un générateur d'effort agencé pour configurer l'embrayage dans une configuration dite débrayée ou embrayée par l'intermédiaire d'une pièce mobile, dite piston, permettant de transmettre vers ledit embrayage l'effort généré au niveau du générateur de force.

De manière connue, un système d'actionnement peut être formé par un générateur d'effort hydraulique comprenant (i) une chambre de pression agencée pour recevoir un fluide pressurisé, (ii) un piston mobile axialement dans la chambre de pression et s'étendant radialement à l'extérieur de la chambre de pression afin d'embrayer ou de débrayer l'embrayage, (iii) une chambre d'équilibrage située à l'opposé de la chambre de pression par rapport au piston, la chambre d'équilibrage comprenant un élément de rappel élastique permettant de générer un effort, dit de rappel, à l'encontre du piston.

La chambre de pression est alimentée en un fluide hydraulique pressurisé afin de permettre le déplacement du piston entre une première position correspondant à une configuration embrayée de l'embrayage et une deuxième position correspondant à une configuration débrayée de l'embrayage. Pour ce faire, le fluide hydraulique pressurisé est acheminé vers la chambre de pression par l'intermédiaire de conduits dits haute pression permettant une circulation fluidique dudit fluide hydraulique pressurisé.

A contrario, la chambre d'équilibrage est alimentée en un fluide hydraulique dit de refroidissement permettant de lubrifier ladite chambre d'équilibrage ainsi que les autres composants du mécanisme d'embrayage. Pour ce faire, le fluide hydraulique de refroidissement est acheminé notamment vers la chambre d'équilibrage par l'intermédiaire de conduits dits basse pression permettant une circulation fluidique dudit fluide hydraulique de refroidissement.

De manière connue, les conduits passent au travers du mécanisme à double embrayages afin d'acheminer le fluide hydraulique de refroidissement vers la chambre d'équilibrage et vers les embrayages dudit mécanisme à double embrayages. En particulier, un moyeu central supportant les embrayages comprend les conduits qui débouchent dans la chambre d'équilibrage des systèmes d'actionnement du mécanisme à double embrayages. De manière connue, les mécanismes à double embrayages antérieurs sont difficiles à assembler, en particulier lors de l'étape d'insertion de l'élément de rappel élastique dans la chambre d'équilibrage correspondante, car il est nécessaire de ne pas obstruer les conduits basse pression durant cette étape.

Dans les documents EP 2 909 052 B1 et DE 10 2007 008 946 A1, les conduits aménagés dans un moyeu du mécanisme d'embrayage débouchent en-dessous de l'élément de rappel élastique, de sorte que l'écoulement du fluide hydraulique pressurisé peut être perturbé si une partie de l'élément de rappel élastique est situé juste en face desdits conduits.

La présente invention a pour objet de répondre au moins en grande partie aux problèmes précédents et de conduire en outre à d'autres avantages en proposant un nouveau mécanisme à double embrayages pour résoudre au moins un de ces problèmes.

Un autre but de la présente invention est de faciliter le montage du mécanisme à double embrayages, et notamment l'insertion de l'élément de rappel élastique dans la chambre d'équilibrage.

Un autre but de la présente invention est d'améliorer la circulation du fluide de refroidissement au sein du mécanisme à double embrayages.

### Exposé de l'invention

Selon un premier aspect de l'invention, on atteint au moins un des objectifs précités avec un mécanisme à double embrayages comprenant :
- un premier embrayage et un deuxième embrayage en rotation autour d'un moyeu central
- un premier système d'actionnement agencé pour embrayer ou débrayer le premier embrayage ;
- un deuxième système d'actionnement agencé pour embrayer ou débrayer le deuxième embrayage, chaque système d'actionnement comprenant :
   o une chambre de pression agencée pour recevoir un fluide pressurisé ;
   o un piston mobile axialement dans la chambre de pression et s'étendant radialement à l'extérieur de la chambre de pression afin d'embrayer ou de débrayer l'embrayage correspondant ;
   o une chambre d'équilibrage située à l'opposé de la chambre de pression par rapport au piston,
   o un élément de rappel élastique logé dans la chambre d'équilibrage, ledit élément de rappel élastique s'étendant entre le piston correspondant et le moyeu central, ledit élément de rappel élastique étant agencé pour exercer un effort axial contre ledit piston.

Selon la présente invention, l'élément de rappel élastique comprend une pluralité d'ouvertures débouchant directement dans une pluralité d'ouvertures complémentaires réalisées sur le moyeu central afin de permettre une communication fluidique entre un conduit fluidique du moyeu central et la chambre d'équilibrage.

Cette configuration avantageuse permet ainsi une meilleure circulation fluidique du fluide hydraulique de refroidissement à l'intérieur des conduits fluidiques logés dans le moyeu central et débouchant dans les chambres d'équilibrage. Consécutivement, le mécanisme à double embrayages conforme au premier aspect de l'invention est mieux lubrifié et l'équilibrage en pression entre les chambres d'actionnement et les chambres d'équilibrage est facilité.

Dans la suite de la description et dans les revendications, on utilisera à titre non limitatif et afin d'en faciliter la compréhension, les termes :
- « longitudinal » pour caractériser une direction et/ou un allongement d'une pièce qui est parallèle à un axe longitudinal O,
- « radial » pour caractériser une direction et/ou un allongement d'une pièce qui est orthogonal à l'axe longitudinal O et donc parallèle à un axe transversal T, qui est orthogonal à l'axe longitudinal O.

On comprendra en cela que l'axe longitudinal O et l'axe transversal T participent d'un repère géométrique R de la description de la présente invention.

De même, dans la suite de la description et dans les revendications, on utilisera à titre non limitatif et afin d'en faciliter la compréhension, les termes :
- « avant » AV ou « arrière » AR selon un sens par rapport à une orientation axiale déterminée par l'axe longitudinal O qui est l'axe principal de rotation du système de transmission, « l'arrière » désignant la partie située à droite des figures, du côté de la transmission, et « l'avant » AV désignant la partie gauche des figures, du côté du moteur ; et
- « intérieur / interne » et/ou « extérieur / externe » par rapport à l'axe transversal T et le long de l'axe transversal T, « l'intérieur » désignant une partie proximale de l'axe longitudinal O et « l'extérieur » désignant une partie distale de l'axe longitudinal O.

Le mécanisme à double embrayages conforme au premier aspect de l'invention peut comprendre avantageusement au moins un des perfectionnements ci-dessous, les caractéristiques techniques formant ces perfectionnements pouvant être prises seules ou en combinaison :
- l'élément de rappel élastique est en appui directement sur le moyeu central ;
- l'élément de rappel élastique est distinct du piston ;
- l'élément de rappel élastique est distinct du moyeu central ;
- l'élément de rappel élastique d'au moins un des systèmes d'actionnement comprend un moyen d'indexation angulaire collaborant avec un moyen d'indexation angulaire complémentaire situé sur le moyeu central. Cette configuration permet avantageusement de faire correspondre l'élément de rappel élastique avec la chambre d'équilibrage et/ou avec le moyeu central au travers d'un nombre prédéterminé de configurations particulières d'assemblage. En d'autres termes, le moyen d'indexation angulaire permet de définir un nombre prédéterminé de configurations d'assemblage de l'élément de rappel élastique avec le moyeu central lorsque ledit élément de rappel élastique est inséré dans la chambre d'équilibrage ;
- l'élément de rappel élastique d'au moins un système d'actionnement comprend :
   o une première pièce annulaire destinée à prendre appui contre une paroi du moyeu central, la première pièce annulaire comprenant le moyen d'indexation angulaire ;
   o une seconde pièce annulaire destinée à prendre appui contre le piston correspondant ;
   o une pluralité d'éléments élastiques s'étendant entre la première pièce annulaire et la deuxième pièce annulaire ;
- la pluralité d'éléments élastiques est du type d'une pluralité de ressorts hélicoïdaux ;
- l'élément de rappel élastique est rapporté sur le piston et le moyeu central ;
- la pluralité d'ouvertures formées dans la première pièce annulaire sont angulairement réparties entre les ressorts hélicoïdaux ;
- le moyen d'indexation angulaire d'au moins un des systèmes d'actionnement est du type mâle et le moyen d'indexation angulaire complémentaire du moyeu central est du type femelle ;
- le moyen d'indexation angulaire est du type d'au moins une patte s'étendant radialement à l'extérieur de l'élément de rappel élastique correspondant, chaque patte collaborant avec une rainure correspondante sur le moyeu central, la ou les rainures formant collectivement le moyen d'indexation angulaire complémentaire. Alternativement, le moyen d'indexation angulaire est du type d'au moins une patte s'étendant radialement à l'intérieur de l'élément de rappel élastique correspondant, chaque patte collaborant avec un trou correspondant sur le moyeu central, le ou les trous formant collectivement le moyen d'indexation angulaire complémentaire. Selon une autre alternative, le moyen d'indexation angulaire est du type d'au moins un rivet extrudé s'étendant axialement au-delà de l'élément de rappel élastique en direction du moyeu central et le moyen d'indexation angulaire complémentaire est du type d'au moins un alésage axial ;
- le moyen d'indexation angulaire et le moyen d'indexation angulaire complémentaire sont respectivement angulairement régulièrement répartis autour d'un axe longitudinal du mécanisme à double embrayages. Éventuellement, le moyen d'indexation angulaire comprend une pluralité de moyens qui sont répartis angulairement autour de l'axe longitudinal de manière non symétrique ;
- le moyen d'indexation angulaire d'au moins un des systèmes d'actionnement est du type femelle et le moyen d'indexation angulaire complémentaire du moyeu central est du type mâle ;
- dans ce cas, le moyen d'indexation angulaire complémentaire est du type d'au moins une patte s'étendant radialement à l'intérieur du moyeu central, chaque patte collaborant avec une rainure correspondante sur l'élément de rappel élastique correspondant, la ou les rainures formant collectivement le moyen d'indexation angulaire ;
- le moyen d'indexation complémentaire est du type d'au moins un rivet extrudé s'étendant axialement au-delà du moyeu central en direction de l'élément de rappel élastique et le moyen d'indexation angulaire est du type d'au moins un alésage axial ;
- le moyeu central comprend un moyen de centrage de l'élément de rappel élastique d'au moins un des systèmes d'actionnement et par rapport à l'axe longitudinal ;
- une face interne de l'au moins une patte forme le moyen de centrage sur un fond de la rainure du moyeu central ;
- la pluralité d'ouvertures de l'élément de rappel élastique est formée sur la première pièce annulaire ;
- la deuxième pièce annulaire et une extrémité intérieure du piston d'au moins un des systèmes d'actionnement sont fixés solidairement ensembles ou forment une seule et même pièce ;
- le moyen d'indexation angulaire complémentaire du moyeu central est commun avec le moyen d'indexation angulaire des premier et deuxième éléments de rappel élastique ;
- une partie de la première pièce annulaire de l'élément de rappel élastique est emmanchée en force dans le moyeu central ;
- le premier et deuxième embrayages sont dans une configuration radiale, le deuxième embrayage étant situé radialement à l'intérieur du premier embrayage. Alternativement, le premier et deuxième embrayages sont dans une configuration axiale.

Selon un deuxième aspect, l'invention concerne aussi un système de transmission pour véhicule automobile comprenant un tel mécanisme à double embrayages dans lequel :
- le premier embrayage est couplé en rotation à un premier arbre de sortie de la transmission par l'intermédiaire d'un premier porte-disques de sortie ;
- le deuxième embrayage est couplé en rotation à un deuxième arbre de sortie de la transmission par l'intermédiaire d'un deuxième porte-disques de sortie ;
- le premier et le deuxième embrayages sont alternativement couplés en rotation à un voile d'entrée, ledit voile d'entrée étant couplé en rotation à un arbre d'entrée entrainé en rotation par au moins un vilebrequin.

Des modes de réalisation variés de l'invention sont prévus, intégrant selon l'ensemble de leurs combinaisons possibles les différentes caractéristiques optionnelles exposées ici.

### Description des figures

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre une vue en coupe axiale d'un mécanisme à double embrayages conforme au premier aspect de l'invention ;
- la FIGURE 2 illustre une vue en perspective et partiellement coupée d'un mécanisme à double embrayages conforme au premier aspect de l'invention ;
- la FIGURE 3A illustre une vue de détail en coupe axiale des systèmes d'actionnement du mécanisme à double embrayages illustré sur la FIGURE 1 ;
- la FIGURE 3B illustre une autre vue de détail en coupe axiale montrant les ouvertures du moyeu central et des éléments de rappel élastique ;
- la FIGURE 4 illustre une vue en perspective d'une première pièce annulaire d'un élément de rappel élastique formant l'un des systèmes d'actionnement du mécanisme à double embrayages illustré sur les FIGURES 1 ou 2 ;
- la FIGURE 5 illustre une vue de détail de la première pièce annulaire illustrée sur la FIGURE 4 ;
- la FIGURE 6 illustre une vue partielle en perspective d'un moyeu central pourvu de la première pièce annulaire illustrée sur les FIGURES 4 et 5 ;
- la FIGURE 7 illustre une vue de face du moyeu central et de la première pièce annulaire illustrés sur les FIGURES 5 et 6 ;
- La FIGURE 8 illustre un autre mode de réalisation de l'indexation angulaire de l'élément de rappel élastique sur le moyeu central du mécanisme à double embrayages.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

### Description détaillée de l'invention

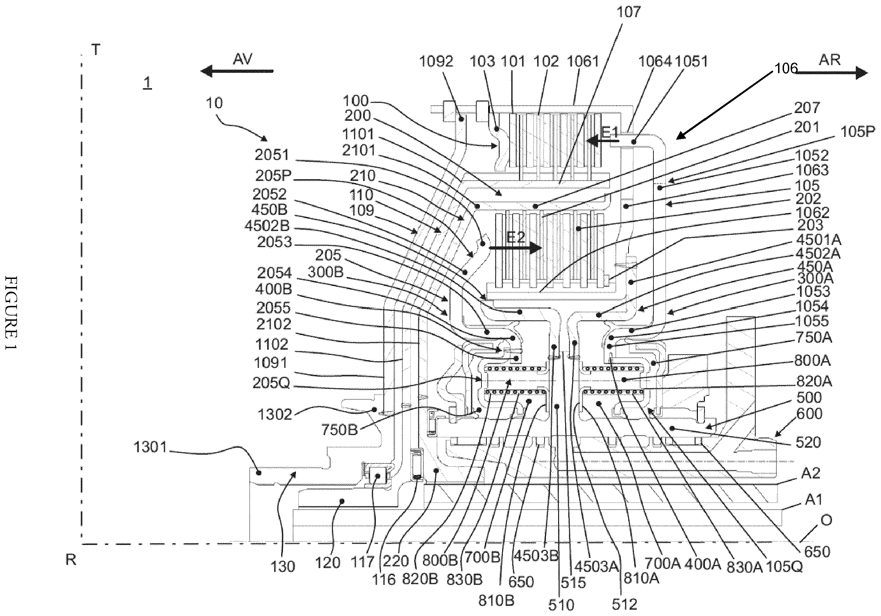

En référence aux FIGURES 1 à 3, l'exemple de réalisation illustré d'un mécanisme à double embrayages 10 conforme au premier aspect de l'invention est préférentiellement du type à double embrayages humides, et comprend un premier embrayage 100 et un deuxième embrayage 200. Préférentiellement encore, dans une position dite radiale, le premier embrayage 100 est situé à l'extérieur du deuxième embrayage 200. Alternativement, le mécanisme à double embrayages 10 peut être dans une configuration dite axiale, le premier embrayage 100 étant situé devant le deuxième embrayage 200. Le mécanisme à double embrayages 10 est intégré sur une chaine de transmission 1 comprenant une transmission couplée en rotation au mécanisme à double embrayages 10.

D'une manière générale, le mécanisme à double embrayages 10 est agencé pour pouvoir coupler en rotation un arbre d'entrée (non représenté) à un premier arbre de transmission A1 ou alternativement à un deuxième arbre de transmission A2 par l'intermédiaire respectivement du premier embrayage 100 ou du deuxième embrayage 200.

Dans le contexte de l'invention, l'arbre d'entrée est entrainé en rotation par au moins un vilebrequin d'un moteur, par exemple un moteur thermique ; et les premier et deuxième arbres de transmission A1, A2 sont destinés à être couplés en rotation à la transmission, telle que par exemple une boite de vitesses du type de celles équipant des véhicules automobiles.

De préférence, le premier arbre de transmission A1 et le deuxième arbre de transmission A2 sont coaxiaux. Plus particulièrement, le deuxième arbre de transmission A2 prend éventuellement la forme d'un cylindre creux à l'intérieur duquel le premier arbre de transmission A1 peut être inséré.

Comme illustré sur les FIGURES 1 à 3, le premier embrayage 100 et le deuxième embrayage 200 sont avantageusement du type multidisques. Chaque embrayage multidisques comprend d'une part une pluralité de premiers éléments de friction 101, 201, tels que par exemple des flasques, liés solidairement en rotation à l'arbre d'entrée, et d'autre part une pluralité de deuxièmes éléments de friction 102, 202, tels que par exemples des disques de friction, liés solidairement en rotation à au moins l'un des arbres de transmission A1, A2.

Le premier arbre de transmission A1 est couplé en rotation à l'arbre d'entrée. Le premier arbre de transmission A1 est entraîné par l'arbre d'entrée en rotation lorsque le premier embrayage 100 est configuré dans une position dite embrayée pour laquelle la pluralité de premiers éléments de friction 101 est couplée en rotation à la pluralité de deuxièmes éléments de friction 102. Alternativement, le premier arbre de transmission A1 est découplé en rotation de l'arbre d'entrée lorsque le premier embrayage 100 est configuré dans une position dite débrayée pour laquelle la pluralité de premiers éléments de friction 101 est découplée en rotation à la pluralité de deuxièmes éléments de friction 102.

De manière analogue, le deuxième arbre de transmission A2 est couplé en rotation à l'arbre d'entrée. Le deuxième arbre de transmission A2 est entraîné par l'arbre d'entrée en rotation lorsque le deuxième embrayage 200 est configuré dans une position embrayée pour laquelle la pluralité de premiers éléments de friction 201 est couplée en rotation à la pluralité de deuxièmes éléments de friction 202. Alternativement, le deuxième arbre de transmission A2 est découplé en rotation de l'arbre d'entrée lorsque le deuxième embrayage 200 est configuré dans une position dite débrayée pour laquelle la pluralité de premiers éléments de friction 201 est découplée en rotation à la pluralité de deuxièmes éléments de friction 202.

Dans le mécanisme à double embrayages 10 illustré sur les FIGURES 1 à 3, le premier embrayage 100 est agencé pour engager les rapports impairs de la transmission et le deuxième embrayage 200 est agencé pour engager les rapports pairs et la marche arrière de la transmission. Alternativement, les rapports pris en charge par le premier embrayage 100 et le deuxième embrayage 200 peuvent être respectivement inversés.

Le premier embrayage 100 et le deuxième embrayage 200 sont agencés pour transmettre alternativement une puissance dite d'entrée - un couple et une vitesse de rotation - de l'arbre d'entrée, à l'un des deux arbres de transmission A1, A2, en fonction de la configuration respective de chaque embrayage 100 et 200 et par l'intermédiaire d'un voile d'entrée 109.

Le premier embrayage 100 et le deuxième embrayage 200 sont agencés pour ne pas être simultanément dans la même configuration embrayée. En revanche, le premier embrayage 100 et le deuxième embrayage 200 peuvent simultanément être configurés dans leur position débrayée.

Le mécanisme à double embrayages 10 comprend un élément d'entrée qui est couplé en rotation d'une part à l'arbre d'entrée et d'autre part au voile d'entrée 109 afin de transmettre la puissance - le couple et la vitesse de rotation - générée au niveau du moteur à l'un des embrayages 100, 200 du mécanisme à double embrayages 10. De préférence, l'élément d'entrée du mécanisme à double embrayages 10 comprend un moyeu d'entrée 130, préférentiellement en rotation autour de l'axe longitudinal O. Le moyeu d'entrée 130 comporte une première élongation inférieure 1301 qui est liée en rotation et/ou axialement à l'arbre d'entrée, éventuellement par l'intermédiaire d'un dispositif d'amortissement, tel qu'un double volant amortisseur par exemple.

Le moyeu d'entrée 130 comprend une élongation extérieure 1302 qui est couplée au voile d'entrée 109, et plus particulièrement à une extrémité inférieure 1091 du voile d'entrée 109. L'extrémité inférieure 1091 est située vers l'avant AV dudit voile d'entrée 109. Préférentiellement, le voile d'entrée 109 et le moyeu d'entrée 130 sont solidaires, par exemple fixés par soudage et/ou par rivetage.

Le voile d'entrée 109 comporte une extrémité supérieure 1092 par laquelle le voile d'entrée 109 est lié en rotation au premier embrayage 100. Cette liaison est réalisée par l'intermédiaire d'une portée d'élongation axiale extérieure 1061 d'un porte-disques d'entrée 106, le porte-disques d'entrée 106 étant lié en rotation au voile d'entrée 109, préférentiellement par coopération de formes, par exemple par des cannelures au niveau de l'extrémité avant AV de ladite portée d'élongation axiale extérieure 1061.

Le premier embrayage 100 et le deuxième embrayage 200 sont chacun commandés par un système d'actionnement 300A, 300B qui seront décrits ultérieurement. Chaque système d'actionnement 300A, 300B est agencé pour pouvoir configurer le premier embrayage 100 et le deuxième embrayage 200 dans une configuration quelconque comprise entre la configuration embrayée et la configuration débrayée.

Le premier système d'actionnement 300A est lié au premier embrayage 100 par l'intermédiaire d'un premier piston 105 comprenant une première partie 105P - décrite ici - et une deuxième partie 105Q - qui sera décrite ultérieurement. D'une manière générale, le premier piston 105 est agencé pour transmettre un premier effort axial E1, exercé parallèlement à l'axe longitudinal O, au premier embrayage 100 par l'intermédiaire de sa première partie 105P collaborant avec les éléments de friction 101, 102 dudit premier embrayage 100, et de sa deuxième partie 105Q collaborant avec un générateur d'effort pour configurer le premier embrayage 100 dans l'une des configurations détaillées précédemment. Au niveau de sa première partie 105P, le premier piston 105 comprend des premières portées d'extension axiales 1051 extérieures qui s'étendent axialement vers l'avant AV pour pouvoir presser les premiers éléments de friction 101 contre les deuxièmes éléments de friction 102 d'une part, et contre un moyen de réaction extérieur 103 lié mécaniquement au voile d'entrée 109 d'autre part. Lorsque les premiers éléments de friction 101 sont écartés des deuxièmes éléments de friction 102, alors le premier embrayage 100 est configuré dans sa configuration débrayée. En revanche, lorsque les premiers éléments de friction 101 sont pressés contre les deuxièmes éléments de friction 102, alors le premier embrayage 100 est configuré dans sa configuration embrayée.

Le premier piston 105 prend la forme d'une tôle ondulée et est incurvée axialement vers l'avant AV à son extrémité radiale extérieure. Les premières portées d'extension axiales 1051 extérieures s'étendent parallèlement à l'axe longitudinal O vers l'avant AV et au travers d'une ouverture 1064 aménagée à travers le porte-disques d'entrée 106.

Le premier piston 105 comprend une première portée d'extension radiale supérieure 1052 située en arrière des portées d'extension axiales 1051 extérieures. La première portée d'extension radiale supérieure 1052 s'étend radialement parallèlement à l'axe transversal T depuis le premier embrayage 100 jusqu'en limite inférieure du deuxième embrayage 200.

Une première portée d'extension axiale intermédiaire 1053, parallèle à l'axe longitudinal O, prolonge la première portée d'extension radiale supérieure 1052 partiellement sous le deuxième embrayage 200, vers l'avant AV du mécanisme à double embrayages 10. La première portée d'extension axiale intermédiaire 1053 est située radialement à l'aplomb des portées d'extension axiales 1051 extérieures. La première portée d'extension axiale intermédiaire 1053 est ménagée parallèlement à l'axe longitudinal O et parallèlement aux portées d'extension axiales 1051 extérieures.

Enfin, le premier piston 105 comprend une pluralité de premières portées d'extensions radiales intérieures 1055 reliées à la portée d'extension axiale intermédiaire 1053 par l'intermédiaire d'une première zone incurvée 1054. Les premières portées d'extensions radiales intérieures 1055 sont reliées à la deuxième partie 105Q du premier piston 105 par l'intermédiaire d'un premier moyen de liaison 400A qui sera décrit ci-après. Alternativement, la première partie 105P et la deuxième partie 105Q du premier piston 105 peuvent être issues de matière.

À titre d'exemple non limitatif, le premier piston 105 peut être obtenu par emboutissage.

Le moyen de réaction extérieur 103 est solidaire du voile d'entrée 109. Préférentiellement, le moyen de réaction extérieur 103 est relié au voile d'entrée 109 par l'intermédiaire du porte-disques d'entrée 106.

Le moyen de réaction extérieur 103 présente notamment des cannelures extérieures qui coopère avec des cannelures intérieures correspondantes du porte-disques d'entrée 106.

Le moyen de réaction extérieur 103 a une forme complémentaire à celle des premiers ou deuxièmes éléments de friction 101, 102, de manière à permettre un couplage par friction des premiers et deuxièmes éléments de friction 101, 102 lorsque le premier système d'actionnement 300A exerce le premier effort axial E1 vers l'avant AV pour configurer le premier embrayage 100 dans sa position embrayée. A contrario, lorsque le premier piston 105 est repoussé vers l'arrière AR par des éléments élastiques de rappel qui seront décrits ultérieurement, alors les premiers éléments de frictions 101 se séparent des deuxièmes éléments de friction 102, permettant alors de découpler lesdits éléments de friction et permettant ainsi de configurer le premier embrayage 100 dans sa configuration débrayée.

Le premier embrayage 100 est destiné à être couplé en rotation au premier arbre de transmission par l'intermédiaire d'un premier porte-disques de sortie 110 formant un élément de sortie dudit premier embrayage 100. Plus particulièrement, le premier porte-disques de sortie 110 est couplé en rotation aux deuxièmes éléments de friction 102 par l'intermédiaire d'une extrémité supérieure 1101 que le porte-disques de sortie 110 comprend. Plus particulièrement encore, le premier porte-disques de sortie 110 est couplé en rotation à un premier moyeu de sortie 120 par l'intermédiaire d'une extrémité intérieure 1102 que le premier porte-disques de sortie 110 comprend.

Le premier porte-disques de sortie 110 comprend sur sa périphérie radiale extérieure une première élongation axiale 107 qui est munie d'une denture destinée à coopérer avec une denture complémentaire sur chaque second élément de friction 102, et plus particulièrement à la périphérie radiale intérieure de chaque second élément de friction 102 du premier embrayage 100. Le premier porte-disques de sortie 110 est ainsi couplé en rotation par engrènement avec les deuxièmes éléments de friction 102 du premier embrayage 100.

L'extrémité intérieure 1102 du premier porte-disques de sortie 110 est lié au premier moyeu de sortie 120 ; ils sont préférentiellement fixés ensemble par soudage, par rivetage ou analogue.

Le premier moyeu de sortie 120 comporte radialement à l'intérieur des cannelures axiales agencées pour coopérer avec des cannelures complémentaires situées sur le premier arbre de transmission A1, de manière à réaliser un couplage en rotation.

Un palier radial 117 est interposé entre le premier moyeu de sortie 120 et le moyeu d'entrée 130 afin de supporter les efforts radiaux du moyeu d'entrée 130 et/ou du voile d'entrée 109 malgré les vitesses de rotation différentes auxquelles peuvent respectivement tourner l'arbre d'entrée et le premier arbre de transmission A1.

De manière analogue, le deuxième embrayage 200 du mécanisme à double embrayages 10 est de conception similaire à celle du premier embrayage 100.

Le deuxième système d'actionnement 300B est lié au deuxième embrayage 200 par l'intermédiaire d'au moins un deuxième piston 205 comprenant une première partie 205P - décrite ici - et une deuxième partie 205Q - qui sera décrite ultérieurement. Le deuxième piston 205 est situé axialement entre le voile d'entrée 109 et le premier piston 105.

D'une manière générale, le deuxième piston 205 est agencé pour transmettre un deuxième effort axial E2, exercé parallèlement à l'axe longitudinal O, au deuxième embrayage 200 via sa première partie 205P collaborant avec les éléments de friction 201, 202 dudit deuxième embrayage 200, et de sa deuxième partie 205Q collaborant avec un générateur d'effort pour configurer le deuxième embrayage 200 dans l'une des configurations détaillées précédemment. Au niveau de sa première partie 205P, le deuxième piston 205 comprend des deuxièmes portées d'extension axiales 2051 extérieures qui s'étendent de manière oblique vers l'arrière AR et vers l'extérieur afin de pouvoir écarter ou presser les premiers éléments de friction 201 contre les deuxièmes éléments de friction 202 d'une part, et contre un moyen de réaction intérieur 203 d'autre part. Lorsque les premiers éléments de friction 201 sont écartés des deuxièmes éléments de friction 202, alors le deuxième embrayage 200 est configuré dans sa configuration débrayée. En revanche, lorsque les premiers éléments de friction 201 sont pressés contre les deuxièmes éléments de friction 202, alors le deuxième embrayage 200 est configuré dans sa configuration embrayée.

Le deuxième piston 205 prend la forme d'une tôle ondulée et comporte une deuxième extrémité radiale extérieure 205 qui est incurvée axialement vers l'arrière AR.

Le deuxième piston 205 comprend une deuxième portée d'extension radiale supérieure 2052 située en avant de ses deuxièmes portées d'extension axiales 2051 extérieures. La deuxième portée d'extension radiale supérieure 2052 s'étend radialement depuis le deuxième embrayage 200 jusqu'à l'intérieur du deuxième embrayage 200, et radialement à l'opposé de la première portée d'extension axiale intermédiaire 1053 du premier piston 105.

Une deuxième portée d'extension axiale intermédiaire 2053 prolonge la deuxième portée d'extension radiale supérieure 2052 sous le deuxième embrayage 200, vers l'arrière AR du mécanisme à double embrayages 10. La deuxième portée d'extension axiale intermédiaire 2053 est située radialement à l'extérieur du deuxième embrayage 200 et à l'opposé de la première portée d'extension radiale supérieure 1052 du premier piston 105. Plus particulièrement, elle est située à l'opposé du porte-disques d'entrée 106.

Enfin, le deuxième piston 205 comprend une deuxième partie d'extension radiale intérieure 2055 qui est reliée à la portée d'extension axiale intermédiaire 2053 par l'intermédiaire d'une portée d'extension radiale 2054. La deuxième partie d'extension radiale intérieure 2055 est reliée à la deuxième partie 205Q du deuxième piston 205 par l'intermédiaire d'un deuxième moyen de liaison 400B qui sera décrit ci-après. Alternativement, la première partie 205P et la deuxième partie 205Q du deuxième piston 205 peuvent être issues de matière.

À titre d'exemple non limitatif, le deuxième piston 205 peut être obtenu par emboutissage.

Le moyen de réaction intérieur 203 est solidaire d'une partie d'élongation axiale intérieure 1062 du porte-disques d'entrée 106.

Le moyen de réaction intérieur 203 prend ici la forme d'un anneau de blocage porté par la partie d'élongation axiale intérieure 1062 du porte-disques d'entrée 106 et situé à l'arrière AR des premiers et deuxièmes éléments de friction 201, 202 du deuxième embrayage 200, de manière à permettre un couplage par friction des premiers et deuxièmes éléments de friction 201, 202 lorsque le deuxième système d'actionnement 300B exerce un effort axial vers l'arrière AR pour configurer ledit deuxième embrayage 200 dans sa position embrayée. A contrario, lorsque le deuxième piston 205 est repoussé vers l'avant AV par des éléments élastiques de rappel qui seront décrits ultérieurement, alors les premiers éléments de frictions 201 se séparent des deuxièmes éléments de friction 202, permettant alors de découpler lesdits éléments de friction 201, 202 et permettant ainsi de configurer le deuxième embrayage 200 dans sa configuration débrayée.

Alternativement, le moyen de réaction intérieur 203 peut prendre la forme d'un bossage d'une face extérieure du porte-disques d'entrée 106 et située en arrière AR des éléments de friction 201, 202 du deuxième embrayage 200. Alternativement encore, le moyen de réaction intérieur 203 et le porte-disques d'entrée 106 sont issus de matière.

Le deuxième embrayage 200 est destiné à être couplé en rotation au deuxième arbre de transmission A2 par l'intermédiaire d'un deuxième porte-disques de sortie 210 formant un élément de sortie dudit deuxième embrayage 200. Plus particulièrement, le deuxième porte-disques de sortie 210 est couplé en rotation aux deuxièmes éléments de friction 202 par l'intermédiaire d'une extrémité supérieure 2101 que le deuxième porte-disques de sortie 210 comprend. Le deuxième porte-disques de sortie 210 est couplé en rotation à un deuxième moyeu de sortie 220 par l'intermédiaire d'une extrémité intérieure 2102, que le deuxième porte-disques de sortie 210 comprend.

Le deuxième porte-disques de sortie 210 comprend sur sa périphérie radiale extérieure une deuxième élongation axiale 207 qui est munie d'une denture destinée à coopérer avec une denture complémentaire sur chaque deuxième élément de friction 202, et plus particulièrement à la périphérie radiale intérieure de chaque deuxième élément de friction 202 du deuxième embrayage 200. Le deuxième porte-disques de sortie 210 est ainsi couplé en rotation par engrènement avec les deuxièmes éléments de friction 202 du deuxième embrayage 200.

Le deuxième porte-disques de sortie 210 est lié au deuxième moyeu de sortie 220 par l'intermédiaire de son extrémité intérieure 2102 ; ils sont préférentiellement fixés ensemble par soudage ou par rivetage.

Par ailleurs, un palier axial 116 est intercalé entre le premier porte-disques de sortie 110 et le deuxième porte-disques de sortie 210 afin de pouvoir transmettre une charge axiale entre les deux porte-disques de sortie 110, 210 qui peuvent tourner à des vitesses différentes lorsque les premier et deuxième embrayages 100, 200 sont configurés dans une configuration différente.

Le deuxième moyeu de sortie 220 comporte radialement à l'intérieur des cannelures axiales agencées pour coopérer avec des cannelures complémentaires situées sur le deuxième arbre de transmission A2, de manière à réaliser un couplage en rotation.

Le porte-disques d'entrée 106 est configuré pour être couplé en rotation avec les premiers éléments de friction 101, 201 des premier 100 et deuxième 200 embrayages, étant rappelé que le porte-disques d'entrée 106 est aussi couplé en rotation au voile d'entrée 109. À cet effet, le porte-disques d'entrée 106 comprend la partie d'élongation axiale extérieure 1061 qui est située à l'extérieure du premier embrayage 100 et qui est couplée, par exemple par engagement de formes complémentaires, avec les premiers éléments de friction 101 du premier embrayage 100. Le porte-disques d'entrée 106 comprend aussi une portée d'élongation radiale 1063 qui prolonge la portée d'élongation axiale extérieure 1061 vers l'arrière AR, et plus particulièrement en arrière AR des premier 100 et deuxième 200 embrayages. À son extrémité intérieure, la portée d'élongation radiale 1063 du porte-disques d'entrée 106 comprend une portée d'élongation axiale intérieure 1062 qui est située radialement à l'intérieur du deuxième embrayage 200 et qui est couplée en rotation, par exemple par engagement de formes complémentaires, avec les premiers éléments de friction 201 du deuxième embrayage 200.

Le porte-disques d'entrée 106 est porté et couplé en rotation au niveau de sa partie intérieure de la portée d'élongation radiale 1063 et de sa portée d'élongation axiale intérieure 1062 par un premier couvercle d'équilibrage 450A du premier système d'actionnement 300A et par un deuxième couvercle d'équilibrage 450B du deuxième système d'actionnement 300B.

Le premier couvercle d'équilibrage 450A comprend une portée cylindrique 4502A d'extension axiale et portant à la fois un bras radial extérieur 4501A et une jambe radiale intérieure 4503A. La portée cylindrique 4502A est préférentiellement orientée parallèlement à l'axe longitudinal O ; tandis que le bras radial extérieur 4501A et la jambe radiale intérieure 4503A sont orientés orthogonalement à l'axe longitudinal O.

Le bras radial extérieur 4501A est solidaire du porte-disques d'entrée 106, et plus particulièrement de la portée d'élongation radiale 1063 du porte-disques d'entrée 106 interposée entre l'ouverture 1064 dudit porte-disques d'entrée 106 et sa partie d'élongation axiale intérieure 1062. Le bras radial extérieur 4501A et la portée d'élongation radiale 1063 du porte-disques d'entrée 106 sont par exemple soudées ou rivetées ou associés par tout autre moyen analogue.

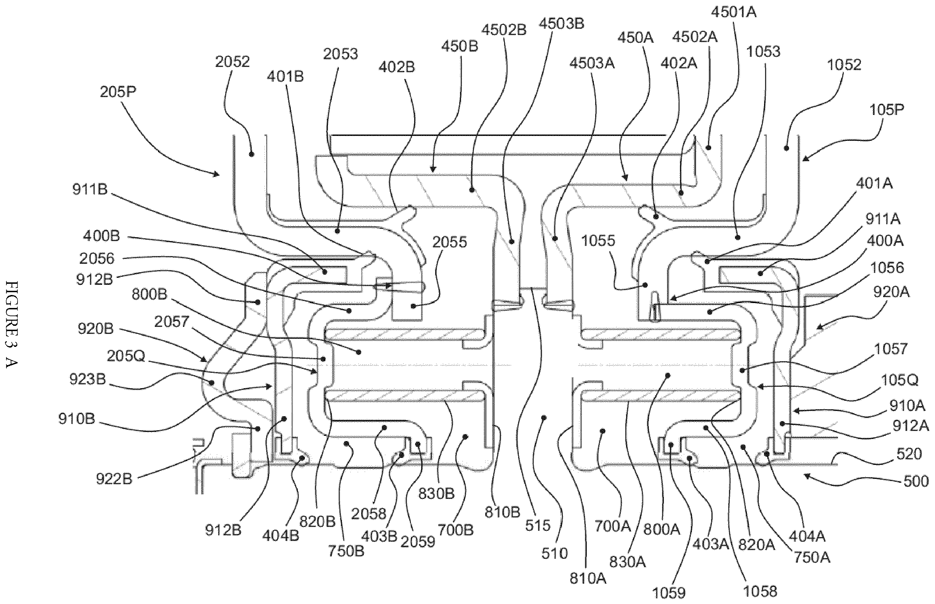

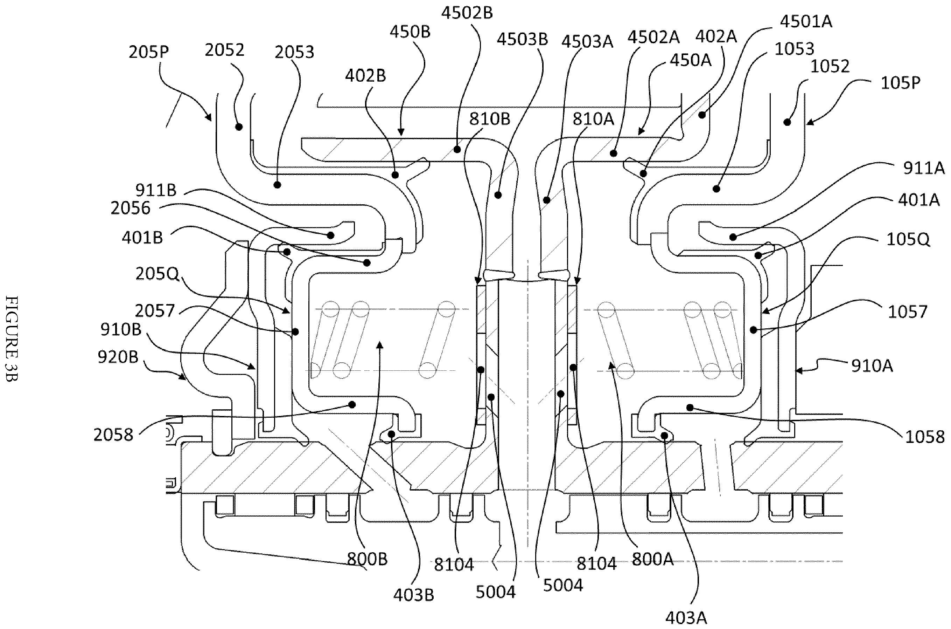

La jambe radiale intérieure 4503A du premier couvercle d'équilibrage 450A comporte une extrémité intérieure qui est solidaire d'un moyeu central 500. Le moyeu central 500 est agencé en « T » dans le plan transverse de la vue en coupe illustrée sur la FIGURE 1 ou 3, et comprend un corps central 510 d'élongation radiale et sensiblement orthogonale à l'axe longitudinal O reliant une portée cylindrique d'élongation axiale 520 parallèle à l'axe longitudinal O. L'extrémité radiale intérieure de la jambe radiale intérieure 4503A est solidaire d'une extrémité radiale supérieure 515 du corps central 510 du moyeu central 500.

Le deuxième couvercle d'équilibrage 450B est agencé en une équerre dans le plan transverse de la vue en coupe illustrée sur la FIGURE 1 ou 3, et il comprend une portée cylindrique 4502B d'extension axiale et une jambe radiale intérieure 4503B. La portée cylindrique 4502B s'étend sensiblement parallèlement à l'axe longitudinal O tandis que la jambe radiale intérieure 4503B s'étend orthogonalement à l'axe longitudinal O.

La jambe radiale intérieure 4503B du deuxième couvercle d'équilibrage 450B comprend une extrémité intérieure qui est solidaire du moyeu central 500, et plus particulièrement au niveau de l'extrémité radiale supérieure 515 du corps central 510 du moyeu central 500. La jambe radiale intérieure 4503A du deuxième couvercle d'équilibrage 450Bet la jambe radiale intérieure 4503A du premier couvercle d'équilibrage 450A sont préférentiellement parallèles entre elles.

Ainsi, le moyeu central 500 supporte les premier et deuxième embrayages 100, 200 par l'intermédiaire du porte-disques d'entrée 106 d'une part, et des premier et deuxième couvercles d'équilibrage 450A, 450B. Le moyeu central 500 est donc couplé en rotation au moyeu d'entrée 130 du mécanisme à double embrayages 10 conforme au premier aspect de l'invention. Lorsque le moyeu d'entrée 130 est couplé à un arbre moteur entrainé en rotation par le vilebrequin d'un moteur, tel que décrit précédemment, alors le moyeu central 500 est animé d'un mouvement de rotation analogue à celui de l'arbre moteur.

Le moyeu central 500 est supporté radialement par un support d'embrayage 600 qui s'étend au moins partiellement parallèlement à l'axe longitudinal O, par l'intermédiaire d'une pluralité de palier de découplage radiaux 650 permettant de découpler la rotation du moyeu central 500 par rapport au support d'embrayage 600 qui est fixe dans cette configuration de mécanisme à double embrayages 10.

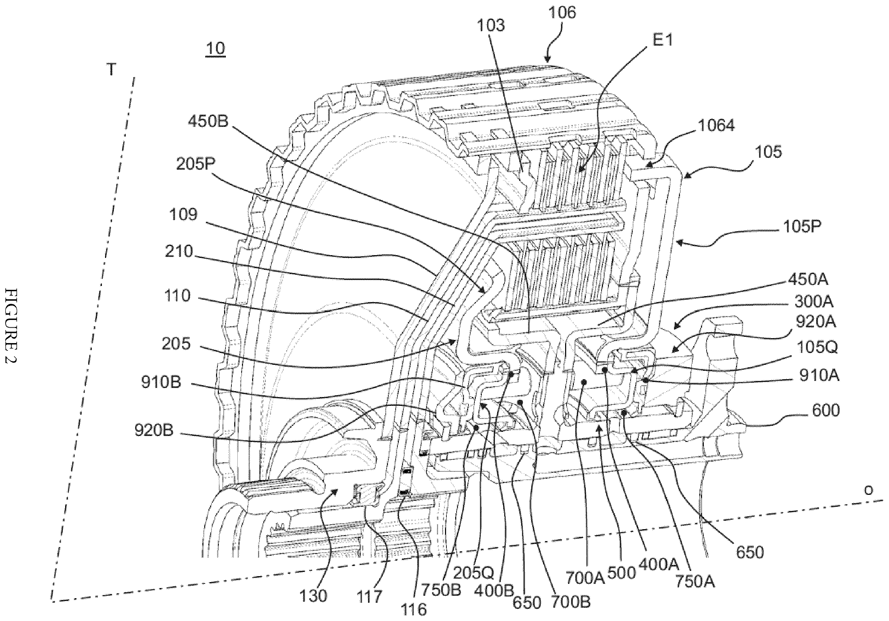

En se reportant également aux FIGURES 2 à 3, le premier système d'actionnement 300A et le deuxième système d'actionnement 300B vont être décrits ci-après.

Chaque système d'actionnement 300A, 300B comprend :
- une chambre de pression 750A, 750B agencée pour recevoir un fluide pressurisé ;
- un piston 105, 205 mobile axialement à l'intérieur de la chambre de pression 750A, 750B, ledit piston 105, 205 étant formé par :
   ∘ une première partie 105P, 205P s'étendant radialement à l'extérieur de la chambre de pression 750A, 750B afin d'embrayer ou de débrayer l'embrayage correspondant, telle que décrite précédemment ;
   ∘ une deuxième partie 105Q, 205Q située radialement à l'intérieur de la première partie 105, 205 et collaborant avec la chambre de pression 750A, 750B, ladite deuxième partie 105Q, 205Q étant fixée solidairement à ladite première partie 105P, 205P ;
   o au moins un moyen de liaison 400A, 400B interposé entre la première partie 105P, 205P et la deuxième partie 105Q, 205Q du piston 105, 205 correspondant ;
- une chambre d'équilibrage 700A, 700B située à l'opposé de la chambre de pression 750A, 750B par rapport à la deuxième partie 105Q, 205Q du piston 105, 205.

Le premier système d'actionnement 300A comprend une première plaque de chemisage 910A qui jouxte une première plaque de réaction 920A permettant de réaliser un renfort axial sur la première plaque de chemisage 910A. La première plaque de réaction 920A est notamment agencée en une couronne dentée destinée à entraîner des pompes de la chaîne de transmission 1 aptes à faire circuler un fluide de lubrification dans le mécanisme à double embrayages 10 lorsque ce dernier est entrainé en rotation.

La première plaque de chemisage 910A est formée par une partie radiale 912A et une partie longitudinale 911A située à l'extrémité extérieure de la partie radiale 912A. La partie radiale 912A de la première plaque de chemisage 910A est en appui axial contre la première plaque de réaction 920A et est orientée parallèlement à l'axe transversal T. La partie radiale 912A de la première plaque de chemisage 910A comprend au niveau de son extrémité radiale intérieure un quatrième joint d'étanchéité 404A qui permet d'assurer un appui radial étanche de ladite partie radiale 912A de la première plaque de chemisage 910A contre la portée cylindrique 520 du moyeu central 500. La partie longitudinale 911A est d'orientation axiale et s'étend à l'intérieur de la portée d'extension axiale intermédiaire 1053 du premier piston 105.

Le premier système d'actionnement 300A est formé aussi par la deuxième partie 105Q du premier piston 105. La deuxième partie 105Q du premier piston 105 est agencée en « U » : elle comporte une première base 1057, une première branche 1056 et une deuxième branche 1058. La première base 1057 est d'extension radiale et relie la première branche 1056 et la deuxième branche 1058 qui sont ménagées parallèlement à l'axe longitudinal O. La première branche 1056 est située radialement à l'extérieur par rapport à la deuxième branche 1058. La première branche 1056 est située à l'extrémité radiale extérieure de la première base 1057 ; et la deuxième branche 1058 est située à l'extrémité radiale intérieure de ladite première base 1057.

De manière avantageuse, la première base 1057 comprend par exemple un bossage pour le centrage de la deuxième partie annulaire 820A du premier élément de rappel élastique 800A.

La première branche 1056 de la deuxième partie 105Q du premier piston 105 comporte une terminaison axiale 415 qui est solidaire de la première partie 105P du premier piston 105, plus particulièrement au niveau de la portée d'extension radiale intérieure 1055. La deuxième branche 1058 de la deuxième partie 105Q du premier piston 105 comporte une terminaison axiale 1059 qui est en appui contre la portée cylindrique d'extension axiale 520 du moyeu central 500 par l'intermédiaire d'un troisième joint d'étanchéité 403A.

La première chambre de pression 750A du premier système d'actionnement 300A est agencée pour recevoir un certain volume de fluide hydraulique sous pression afin de générer un effort axial sur la deuxième partie 105Q du premier piston 105 et de configurer ainsi le premier embrayage 100 dans l'une des configurations décrites précédemment. Le fluide hydraulique pressurisé est avantageusement acheminé par l'intermédiaire de conduits de circulation fluidiques haute pression traversant au moins en partie la portée cylindrique d'extension axiale 520 du moyeu central 500 et débouchant dans la chambre de pression 750A au niveau d'une face extérieure de ladite portée cylindrique d'extension axiale 520.

La première chambre de pression 750A du premier système d'actionnement 300A est ainsi avantageusement délimitée :
- radialement vers l'intérieur, par une portion de la portée cylindrique 520 du moyeu central 500,
- axialement vers l'arrière AR, par la partie radiale 912A de la première plaque de chemisage 910A,
- radialement vers l'extérieur, par la portée d'extension axiale intermédiaire 1053 et la première zone incurvée 1054 de la première partie 105P du premier piston 105 et par la partie longitudinale 911A de la première plaque de chemisage 910A, et
- axialement vers l'avant AV, par la portée d'extension radiale intérieure 1055 de la première partie 105P du premier piston 105 et par la deuxième partie 105Q du premier piston 105.

On notera aussi que l'étanchéité de la chambre de pression 750A du premier système d'actionnement 300A est garantie par la présence :
- d'un premier joint d'étanchéité 401A situé entre la partie longitudinale 911A de la première plaque de chemisage 910A et la portée d'extension radiale intérieure 1055 et/ou la portée d'extension axiale intermédiaire 1053 de la première partie 105P du premier piston 105 ;
- du troisième joint d'étanchéité 403A situé entre l'extrémité radiale intérieure de la deuxième partie 105Q du premier piston 105 et la portée cylindrique 520 du moyeu central 500 ;
- du quatrième joint d'étanchéité 404A situé entre l'extrémité radiale intérieure de la partie radiale 912A de la première plaque de chemisage 910A et la portée cylindrique 520 du moyeu central 500.

La première chambre d'équilibrage 700A du premier système d'actionnement 300A est agencée pour recevoir un certain volume de fluide hydraulique permettant de lubrifier le premier élément de rappel élastique 800A logé dans ladite chambre d'équilibrage 700A. Le fluide de lubrification est avantageusement acheminé par l'intermédiaire de conduits de circulation fluidiques basse pression traversant au moins en partie la portée cylindrique d'extension axiale 520 du moyeu central 500 et débouchant dans la chambre d'équilibrage 700A au niveau d'une face extérieure de ladite portée cylindrique d'extension axiale 520. La chambre d'équilibrage 700A du premier système d'actionnement 300A est avantageusement délimitée :
- radialement vers l'intérieur, par une portion de la portée cylindrique 520 du moyeu central 500,
- axialement vers l'arrière AR, par la portée d'extension radiale intérieure 1055 de la première partie 105P du premier piston 105 et par la deuxième partie 105Q du premier piston 105,
- radialement vers l'extérieur, par la portée cylindrique 4502A du premier couvercle d'équilibrage 450A, et
- axialement vers l'avant AV, par le corps central 510 du moyeu central 4501A et par la jambe radiale intérieure 4503A et la portée cylindrique 4502A du premier couvercle d'équilibrage 450A.

On notera aussi que l'étanchéité de la première chambre d'équilibrage 700A du premier système d'actionnement 300A est garantie par la présence :
- du deuxième joint d'étanchéité 402A qui s'étend entre la portée d'extension radiale intérieure 1055 et la portée d'extension axiale intermédiaire 1053 de la première partie 105P du premier piston d'une part, et la portée cylindrique 4502A du premier couvercle d'équilibrage 450A d'autre part ; et
- du troisième joint d'étanchéité 403A situé entre l'extrémité radiale intérieure de la deuxième partie 105Q du premier piston 105 et la portée cylindrique 520 du moyeu central 500.

Le deuxième système d'actionnement 300B est associé à une deuxième plaque de réaction 920B qui comprend une partie courbée 923B interposée entre une première portée d'extension radiale 921B et une deuxième portée d'extension radiale 922B. La partie courbée 923B est une partie formant une proéminence vers l'avant AV par rapport à la première portée d'extension radiale 921B et la deuxième portée d'extension radiale 922B afin de renforcer la tenue de la plaque de réaction 920B au regard des efforts axiaux générés par le deuxième système d'actionnement 300B. De manière avantageuse, la deuxième plaque de réaction 920B est arrêtée axialement vers l'avant par un anneau de blocage logé dans une gorge circonférentielle du moyeu central 500.

Le deuxième système d'actionnement 300B comprend également une deuxième plaque de chemisage 910B qui jouxte la deuxième plaque de réaction 920B. La deuxième plaque de chemisage 910B comprend une partie radiale 912B et une partie longitudinale 911B. La partie radiale 912B de la deuxième plaque de chemisage 910B est en contact avec la deuxième patte 922B de la deuxième plaque de réaction 920B et est orientée parallèlement à l'axe transversal T. La partie longitudinale 911B de la deuxième plaque de chemisage 910B est quant à elle orientée parallèlement à l'axe longitudinal O et est en contact avec la deuxième portée d'extension axiale intermédiaire 2053 du deuxième piston 205.

Le deuxième système d'actionnement 300B est formé aussi par la deuxième partie 105Q du deuxième piston 105. La deuxième partie 205Q du deuxième piston 105 est agencé en « U » et elle comporte une première base 2057, une première branche 306b et une deuxième branche 2058. La première base 2057 de la deuxième partie 205Q du deuxième piston 105 est d'extension radiale et relie la première branche 2056 et la deuxième branche 2058 qui sont ménagées parallèlement à l'axe longitudinal O. La première branche 2056 de la deuxième partie 205Q du deuxième piston 105 est située radialement à l'extérieur par rapport à la deuxième branche 2058. La première branche 2056 de la deuxième partie 205Q du deuxième piston 105 est située à l'extrémité radiale extérieure de la première base 2057 ; et la deuxième branche 2058 est située à l'extrémité radiale intérieure de ladite première base 1057.

De manière avantageuse, la première base 1057 comprend par exemple un bossage pour le centrage de la deuxième partie annulaire 800A du premier élément de rappel élastique 800A.

La première branche 2056 de la deuxième partie 205Q du deuxième piston 205 comporte une terminaison axiale 425 qui est solidaire de la première partie 205P du deuxième piston 205, plus particulièrement au niveau de la portée d'extension radiale intérieure 2055. La deuxième branche 2058 de la deuxième partie 205Q du deuxième piston 205 comporte une terminaison axiale 2059 qui est en appui contre la portée cylindrique d'extension axiale 520 du moyeu central 500 par l'intermédiaire d'un troisième joint d'étanchéité 403B.

La deuxième chambre de pression 750B du deuxième système d'actionnement 300B est agencée pour recevoir un certain volume de fluide hydraulique sous pression afin de générer un effort axial sur la deuxième partie 205Q du deuxième piston 205 et de configurer ainsi le deuxième embrayage 200 dans l'une des configurations décrites précédemment. Le fluide hydraulique pressurisé est avantageusement acheminé par l'intermédiaire de conduits de circulation fluidiques haute pression traversant au moins en partie la portée cylindrique d'extension axiale 520 du moyeu central 500 et débouchant dans la chambre de pression 750B du deuxième système d'actionnement 300B au niveau d'une face extérieure de ladite portée cylindrique d'extension axiale 520.

La deuxième chambre de pression 750B du deuxième système d'actionnement 300B est ainsi avantageusement délimitée :
- radialement vers l'intérieur, par une portion de la portée cylindrique 520 du moyeu central 500,
- axialement vers l'arrière AR, par la partie radiale 912B de la deuxième plaque de chemisage 910B,
- radialement vers l'extérieur, par la portée d'extension axiale intermédiaire 2053 et la première zone incurvée 2054 de la deuxième partie 205Q du deuxième piston 205 et par la partie longitudinale 911B de la deuxième plaque de chemisage 920B, et
- axialement vers l'avant AV, par la portée d'extension radiale intérieure 2055 de la première partie 205P du deuxième piston 205 et par la deuxième partie 205Q du deuxième piston 205.

On notera aussi que l'étanchéité de la chambre de pression 750B du deuxième système d'actionnement 300B est garantie par la présence :
- d'un premier joint d'étanchéité 401B situé entre la partie longitudinale 911B de la deuxième plaque de chemisage 910B et la portée d'extension radiale intérieure 2055 et/ou la portée d'extension axiale intermédiaire 2053 de la première partie 205P du deuxième piston 205 ;
- d'un troisième joint d'étanchéité 403B situé entre l'extrémité radiale intérieure de la deuxième partie 205Q du deuxième piston 205 et la portée cylindrique 520 du moyeu central 500 ;
- d'un quatrième joint d'étanchéité 404B situé entre l'extrémité radiale intérieure de la partie radiale 912B de la deuxième plaque de chemisage 910B et la portée cylindrique 520 du moyeu central 500.

La deuxième chambre d'équilibrage 700B du deuxième système d'actionnement 300B est agencée pour recevoir un certain volume de fluide hydraulique permettant de lubrifier le deuxième élément de rappel élastique 800B logé dans ladite chambre d'équilibrage 700B. Le fluide de lubrification est avantageusement acheminé par l'intermédiaire de conduits de circulation fluidiques basse pression traversant au moins en partie la portée cylindrique d'extension axiale 520 du moyeu central 500 et débouchant dans la chambre d'équilibrage 700B du deuxième système d'actionnement 300B au niveau d'une face extérieure de ladite portée cylindrique d'extension axiale 520. La chambre d'équilibrage 700B du deuxième système d'actionnement 300B est avantageusement délimitée :
- radialement vers l'intérieur, par une portion de la portée cylindrique 520 du moyeu central 500 ;
- axialement vers l'arrière AR, par le corps central 510 du moyeu central 500 et par la jambe radiale intérieure 4503A et la portée cylindrique 4502B du deuxième couvercle d'équilibrage 450B ;
- radialement vers l'extérieur, par la portée cylindrique 4502B du deuxième couvercle d'équilibrage 450B ; et
- axialement vers l'avant AV, par la portée d'extension radiale intérieure 2055 de la première partie 205P du deuxième piston 205 et par la deuxième partie 205Q du deuxième piston 205.

On notera encore que l'étanchéité de la deuxième chambre d'équilibrage 700B du premier deuxième d'actionnement 300B est garantie par la présence :
- du deuxième joint d'étanchéité 402B qui s'étend entre la portée d'extension radiale intérieure 2055 et la portée d'extension axiale intermédiaire 2053 de la première partie 205P du deuxième piston 205 d'une part, et la portée cylindrique 4502B du deuxième couvercle d'équilibrage 450B d'autre part ; et
- du troisième joint d'étanchéité 403B situé entre l'extrémité radiale intérieure de la deuxième partie 205Q du deuxième piston 205 et la portée cylindrique 520 du moyeu central 500.

On comprendra à ce stade de la description qu'une caractéristique de la présente invention réside dans le fait que :
- la première partie 105P et la deuxième partie 105Q du premier piston 105 sont rendus mobiles par le contrôle du fluide pressurisé remplissant la première chambre de pression 750A d'une part, et par l'action du premier élément de rappel élastique 800A logé dans la première chambre d'équilibrage 700A d'autre part ;
- la première partie 205P et la deuxième partie 205Q du deuxième piston 205 sont rendus mobiles par le contrôle du fluide pressurisé remplissant la chambre de pression 750B d'une part, et par l'action du deuxième élément de rappel élastique 800B logé dans la deuxième chambre d'équilibrage 700B d'autre part.

Chaque système d'actionnement 300A, 300B comprend en outre un élément de rappel élastique 800A, 800B agencé pour générer un effort axial s'opposant au déplacement du piston 105, 205 correspondant pour embrayer l'embrayage 100, 200 correspondant. En particulier, le corps central 510 du moyeu central 500 comprend aussi une portée cylindrique d'extension radiale 512 contre laquelle une première partie annulaire 810A d'un premier élément de rappel élastique 800A et une première partie annulaire 810B d'un deuxième élément de rappel élastique 800B sont en appui axial. Le premier élément de rappel élastique 800A s'étend entre sa première partie annulaire 810A et une deuxième partie annulaire 820A dudit premier élément de rappel élastique 800A ; et le deuxième élément de de rappel élastique 800B s'étend entre sa première partie annulaire 810B et une deuxième partie annulaire 820B dudit deuxième élément de rappel élastique 800B. Pour chaque élément de rappel élastique 800A, 800B, une pluralité d'éléments élastiques 830A, 830B s'étendent entre la première partie annulaire 810 et la deuxième partie annulaire 820 correspondantes. De manière avantageuse, la pluralité d'éléments élastiques 830 sont du type du type à ressorts hélicoïdaux. La deuxième partie annulaire 820A, 820B de chaque élément de rappel élastique 800A, 800B est en appui axial contre une face en regard du piston 105, 205 correspondant, et plus particulièrement au niveau de la deuxième partie 105Q, 205Q dudit piston 105, 205.

De manière avantageuse, les premier 800A et deuxième 800B éléments de rappel élastique sont identiques.

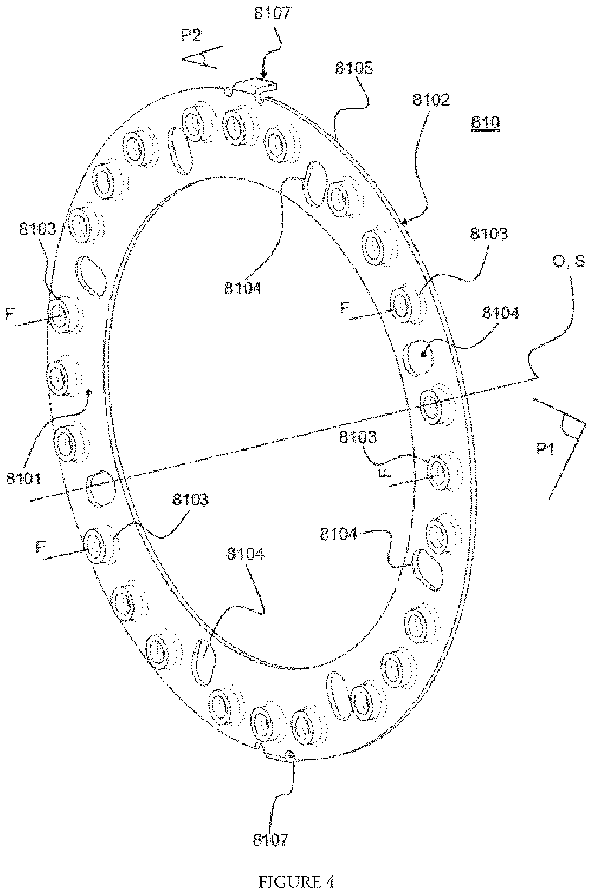

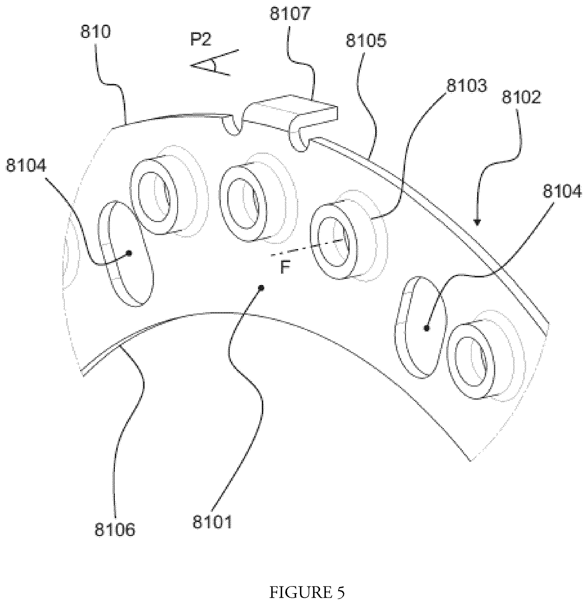

Les FIGURES 4 et 5 illustrent un mode de réalisation particulier de la première pièce annulaire 810 d'un des éléments de rappel élastique 800.

La première pièce annulaire 810 prend la forme d'un anneau circulaire, l'axe longitudinal O formant un axe de symétrie S circulaire de la première pièce annulaire 810. La première pièce annulaire 810 est préférentiellement de faible épaisseur axiale. Elle est délimitée axialement entre une première face 8101 et une deuxième face 8102, préférentiellement parallèles entre elles. L'axe de symétrie S est avantageusement orthogonal aux première 8101 et deuxième 8102 faces. La deuxième face 8102 de l'élément de rappel élastique 800 est destinée à être disposée en appui axial contre la portée cylindrique d'extension radiale 512 du moyeu central 500. La première face 8101 de l'élément de rappel élastique 800 est destinée à être en regard de la deuxième pièce annulaire 820 dudit élément de rappel élastique 800.

La première pièce annulaire 810 comprend en bordure de la première face 8101 et de la deuxième face 8102 un rebord extérieur 8105 et un rebord intérieur 8106, le rebord intérieur 8106 étant situé radialement plus proche de l'axe de symétrie S que le rebord extérieur 8105. Les rebords extérieur 8105 et intérieur 8106 délimitent radialement la première pièce annulaire 810 à l'intérieur d'un plan P1.

La première face 8101 est pourvue d'au moins un plot de réception 8103 d'un élément élastique 830 de l'élément de rappel élastique 800, formé plus particulièrement par un ressort hélicoïdal tel que décrit précédemment. Chaque plot de réception 8103 est notamment agencé en un fût cylindrique qui émerge orthogonalement au plan P1 selon lequel la première pièce annulaire 810 s'étend. Éventuellement, le chaque plot de réception 8103 est un fût cylindrique creux, non débouchant sur la deuxième face 8102 de l'élément de rappel élastique 800. Alternativement, chaque plot de réception 8103 est un fût cylindrique creux débouchant sur la deuxième face 8102 de l'élément de rappel élastique 800. Alternativement encore, chaque plot de réception 8103 est un fût cylindrique plein. Chaque plot de réception 8103 est avantageusement ménagé autour d'un axe de fût F qui est parallèle à l'axe de symétrie S. De préférence, la première face 8101 de l'élément de rappel élastique 800 comprend une pluralité de plots de réception 8103 angulairement régulièrement répartis autour de l'axe de symétrie S. Dans l'exemple de réalisation illustré sur les FIGURES 4 et 5, la première face 8101 comprend 24 plots de réception 8103

Complémentairement, la première pièce annulaire 810 de l'élément de rappel élastique 800 comprend une pluralité d'ouvertures 8104 qui sont ménagées au travers de la pièce annulaire 810, entre la première face 8101 et la deuxième face 8102 dudit élément de rappel élastique 800. Autrement dit, l'ouverture 8104 forme un passage pour le fluide de lubrification qui circule depuis le moyeu central 500 vers la chambre d'équilibrage 700 correspondante par l'intermédiaire des conduits de circulation fluidiques basse pression du mécanisme à double embrayages 10. Comme cela est illustré sur la FIGURE 3B, les ouvertures 8104 débouchent directement dans les ouvertures complémentaires 5004 aménagées dans le moyeu central 500, de sorte que la circulation du fluide de refroidissement est améliorée. Dans le plan de la première face 8101, la forme de l'ouverture 8104 peut être quelconque, préférentiellement circulaire ou oblongue telle que représentée sur les FIGURES 4 et 5. De préférence, la première pièce annulaire 810 comprend une pluralité d'ouvertures 8104 qui sont angulairement régulièrement réparties autour de l'axe de symétrie S.

La communication directe des ouvertures 8104 dans les ouvertures complémentaires 5004 est rendu possible grâce à des moyens d'indexation angulaires 8107, 5004. En effet, conformément à l'invention selon son premier aspect, la première pièce annulaire 810 comprend au moins un moyen d'indexation angulaire 8107 destiné à collaborer avec un moyen d'indexation angulaire complémentaire 5004 situé sur le moyeu central 500. Plus particulièrement, le rebord extérieur 8105 de la première pièce annulaire 810 est pourvu d'au moins une patte 8107 qui s'étend en saillie par rapport aux première 8101et deuxième 8102 faces de la première pièce annulaire. L'au moins une patte 8107 forme ainsi le moyen d'indexation angulaire de l'élément de rappel élastique 800. Plus particulièrement, chaque patte 8107 est ménagée à l'intérieur d'un deuxième plan P2 perpendiculaire au premier plan P1. Elle s'étend avantageusement dans une direction axiale opposée à la première face 8101 de la première pièce annulaire 810 et par rapport à sa deuxième face 8102. Dans le plan P2, la patte 8107 peut prendre n'importe quelle forme, notamment rectangulaire comme illustré sur la FIGURE 5.

Dans l'exemple de réalisation illustré sur les FIGURES 4 et 5, la première pièce annulaire 810 comprend deux pattes 8107 situées diamétralement opposées par rapport à l'axe de symétrie S. Alternativement, la première pièce annulaire 810 peut comprendre une trois pattes 8107 réparties à 120° autour de l'axe longitudinal O.

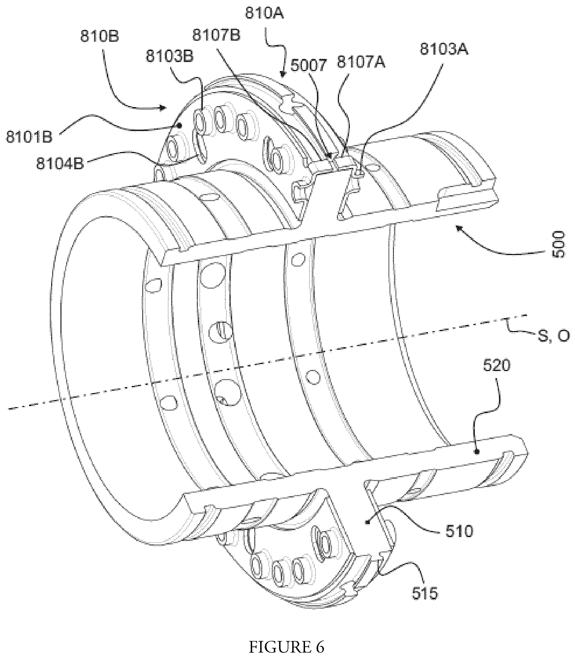

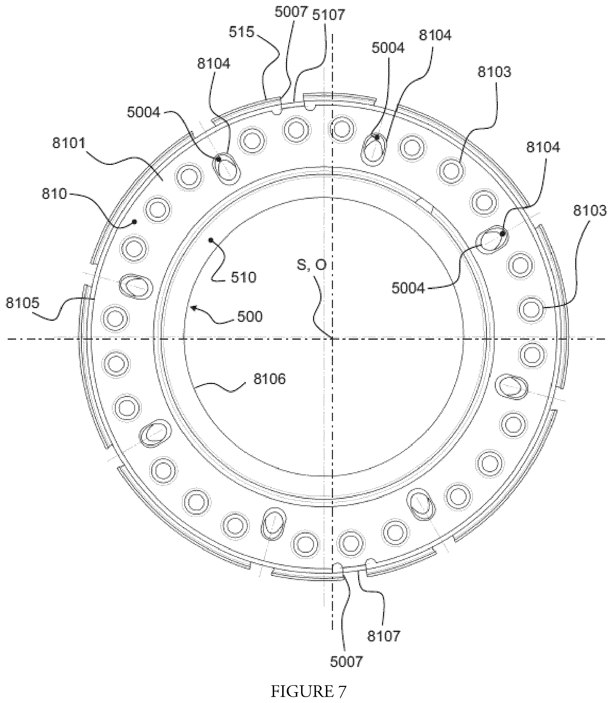

En se reportant également sur les FIGURE 6 et 7 qui illustrent la collaboration de la première pièce annulaire 810 de l'élément de rappel élastique 800 avec le moyeu central 500, on comprend que la patte 8107 forme un moyen d'indexation angulaire collaborant avec un moyen d'indexation complémentaire 5007 afin de positionner angulairement la première pièce annulaire 810 sur le moyeu central 500. Ainsi, il est possible lors du montage de l'élément de rappel élastique 800 correspondant de facilement faire situer en regard axialement les ouvertures 8104 de la première pièce annulaire 810 avec d'ouvertures complémentaires 5004 équipant le moyeu central 500. En particulier, les ouvertures complémentaires 5004 sont ménagées au travers du corps central 510 du moyeu central 500 qui comprend en son sein une portion des conduits de circulation fluidiques basse pression. Ainsi, les ouvertures complémentaires 5004 du moyeu central 500 et les ouvertures 8104 de l'élément de rappel élastique 800 permettent collectivement de faire déboucher les conduits de circulation fluidiques du corps central 510 du moyeu central 500 dans la chambre d'équilibrage 700A, 700B correspondante.

L'invention conforme à son premier aspect permet de tirer avantageusement partie des moyens d'indexation angulaire 8107 de la première pièce annulaire 810 de l'élément de rappel élastique 800 collaborant avec les moyens d'indexation angulaire complémentaires 5007 du moyeu central 500 pour définir des positions angulaires prédéterminées relatives entre ledit élément de rappel élastique 800 et ledit moyeu central 500.

De manière avantageuse, le corps central 510 du moyeu central 500 forme une portée d'extension radiale ménagée dans un plan parallèle au plan P1. Le corps central 510 est délimité radialement vers l'extérieur par son extrémité radiale supérieure 515 qui forme une portée circonférentielle.

Chaque patte 8107 de la première pièce annulaire 810 collabore avantageusement avec une rainure 5007A correspondante du moyeu central 500. La ou les rainures 5007A forment ainsi des moyens d'indexation angulaire complémentaires 5007 du moyeu central 500.

D'une manière générale, les moyens d'indexation angulaire complémentaires 5007 collaborent avec les moyens d'indexation angulaire 8107 par collaboration de forme. Dans l'exemple illustré sur les FIGURES 6 et 7, les pattes 8107 forment bien entendu des moyens d'indexation angulaire 8107 du type mâle ; et les moyens d'indexation angulaire complémentaires 5007 formés par les rainures 5007 sont du type femelle. La face interne des pattes 8107 forme un moyen de centrage des éléments de rappel élastique sur le fond de la rainure 5007 du moyeu central 500.

Les moyens d'indexation angulaire complémentaires 5007 sont avantageusement régulièrement répartis autour de l'axe de symétrie S, et préférentiellement encore d'une manière compatible avec la répartition angulaire des moyens d'indexation angulaire 7107 de la première pièce annulaire 810 de l'élément de rappel élastique 800.

Ces configurations avantageuses permettent ainsi d'améliorer la circulation du fluide de lubrification dans la chambre d'équilibrage 700 d'une part, et facilitent aussi les opérations d'assemblage de l'élément de rappel élastique 800 dans ladite chambre d'équilibrage 700.

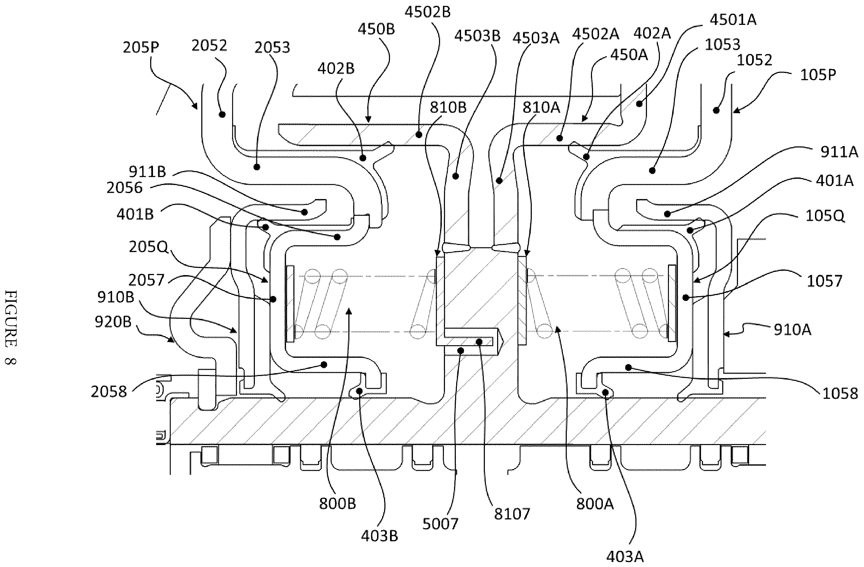

La FIGURE 8 illustre un autre mode de réalisation de l'élément de rappel élastique 800A, 800B monté dans la chambre d'équilibrage 700A, 700B du système d'actionnement 30. Dans ce mode de réalisation, l'élément de rappel élastique 800A, 800B comprend la première pièce annulaire 810 prenant appui contre le moyeu central 500, la seconde pièce annulaire 820 prenant appui contre le piston 105, 205 correspondant et la pluralité d'éléments élastiques 830A, 830B s'étendant entre la première pièce annulaire 810 et la deuxième pièce annulaire 820. La seconde pièce annulaire 820 est distincte du piston 105, 205 correspondant. La première pièce annulaire 810 comprend le moyen d'indexation angulaire 8107.

Dans l'exemple illustré sur la FIGURE 8, le moyen d'indexation angulaire est du type d'au moins une patte 8107 s'étendant radialement à l'intérieur de l'élément de rappel élastique 800A, 800B correspondant. Plus particulièrement, le rebord intérieur 8106 de la première pièce annulaire 810 est pourvu d'au moins une patte 8107 collaborant avec un trou 5007B correspondant sur le moyeu central 500, le ou les trous 5007B formant collectivement le moyen d'indexation angulaire complémentaire 5007.

L'au moins une patte 8107 s'étend en saillie par rapport à la première pièce annulaire 810 en direction du moyeu central. Plus particulièrement, une direction d'extension de l'au moins une patte 8107 est parallèle à une direction d'extension du trou 5007 correspondant avec lequel elle collabore, afin de faciliter son insertion. Dans l'exemple illustré sur la FIGURE 8, l'au moins une patte 8107 et le trou 5007 correspondant s'étend selon la direction axiale, de manière sensiblement parallèle à l'axe longitudinal O. L'au moins une patte est avantageusement obtenue par pliage ou par emboutissage.

En synthèse, l'invention concerne un mécanisme à double embrayages 10 dont chaque système d'actionnement 300A, 300B comprend une chambre de pression 750A, 750B agencée pour recevoir un fluide pressurisé, un piston 105, 205 mobile axialement dans la chambre de pression 750A, 750B afin d'embrayer ou de débrayer l'embrayage 100, 200 correspondant, une chambre d'équilibrage 700A, 700B située à l'opposé de la chambre de pression 750A, 750B par rapport au piston 105, 205, et un élément de rappel élastique 800A, 800B logé dans la chambre d'équilibrage et agencé pour exercer un effort axial contre ledit piston 105, 205. Selon l'invention, l'élément de rappel élastique 800A, 800B comprend une pluralité d'ouvertures 8104 collaborant avec une pluralité d'ouvertures complémentaires 5004 situées sur le moyeu central 500 du mécanisme d'embrayage 10 afin de permettre une communication fluidique entre un conduit de circulation fluidique du moyeu central 500 et la chambre d'équilibrage 700A, 700B correspondante. Afin de garantir leur alignement et de faciliter le montage de l'élément de rappel élastique 800A, 800B dans la chambre d'équilibrage 700A, 700B, l'élément de rappel élastique 800A, 800B d'au moins un des systèmes d'actionnement 300A, 300B comprend un moyen d'indexation angulaire 8107 collaborant avec un moyen d'indexation angulaire complémentaire 5007 situé sur le moyeu central 500.

Bien sûr, l'invention n'est pas limitée aux exemples qui viennent d'être décrits et de nombreux aménagements peuvent être apportés à ces exemples sans sortir du cadre de l'invention telle que définie par les revendications.

## Revendications

1. Mécanisme à double embrayages (10) comprenant :
- un premier embrayage (100) et un deuxième embrayage (200) en rotation autour d'un moyeu central (500) ;
- un premier système d'actionnement (300A) agencé pour embrayer ou débrayer le premier embrayage (100) ;
- un deuxième système d'actionnement (300B) agencé pour embrayer ou débrayer le deuxième embrayage (200), chaque système d'actionnement (300A, 300B) comprenant :
∘ une chambre de pression (750A, 750B) agencée pour recevoir un fluide pressurisé ;
∘ un piston (105, 205) mobile axialement dans la chambre de pression (750A, 750B) et s'étendant radialement à l'extérieur de la chambre de pression (750A, 750B) afin d'embrayer ou de débrayer l'embrayage (100, 200) correspondant ;
∘ une chambre d'équilibrage (700A, 700B) située à l'opposé de la chambre de pression (750A, 750B) par rapport au piston (105, 205),
∘ un élément de rappel élastique (800A, 800B) logé dans la chambre d'équilibrage, ledit élément de rappel élastique (800A, 800B) s'étendant entre le piston correspondant (105, 205) et le moyeu central (500), ledit élément de rappel élastique (800A, 800B) étant agencé pour exercer un effort axial contre ledit piston (105, 205) ; ledit élément de rappel élastique comprenant une pluralité d'ouvertures (8104);
**caractérisé en ce que** dans chaque système d'actionnement (300A, 300B), ladite pluralité d'ouvertures (8104) débouche directement dans une pluralité d'ouvertures complémentaires (5004) réalisées sur le moyeu central (500) afin de permettre une communication fluidique entre un conduit de circulation fluidique du moyeu central (500) et la chambre d'équilibrage (700A, 700B).

2. Mécanisme à double embrayages (10) selon la revendication précédente, dans lequel l'élément de rappel élastique (800A, 800B) d'au moins un des systèmes d'actionnement (300A, 300B) comprend un moyen d'indexation angulaire (8107) collaborant avec un moyen d'indexation angulaire complémentaire (5007) situé sur le moyeu central (500).

3. Mécanisme à double embrayages (10) selon la revendication précédente, dans lequel l'élément de rappel élastique (800A, 800B) d'au moins un système d'actionnement (300A, 300B) comprend :
- une première pièce annulaire (810) destinée à prendre appui contre une paroi (5002) du moyeu central (500), la première pièce annulaire (8101) comprenant le moyen d'indexation angulaire (8107) ;
- une seconde pièce annulaire (820) destinée à prendre appui contre le piston (105, 205) correspondant ;
- une pluralité d'éléments élastiques (830) s'étendant entre la première pièce annulaire (810) et la deuxième pièce annulaire (820).

4. Mécanisme à double embrayages (10) selon la revendication précédente, dans lequel la pluralité d'éléments élastiques (830) est du type d'une pluralité de ressorts hélicoïdaux.

5. Mécanisme à double embrayages (10) selon la revendication précédente, dans lequel la pluralité d'ouvertures (8104) formées dans la première pièce annulaire (810) sont angulairement réparties entre les ressorts hélicoïdaux.

6. Mécanisme à double embrayages (10) selon l'une quelconque des revendications 2 à 5, dans lequel le moyen d'indexation angulaire (8107) d'au moins un des systèmes d'actionnement (300A, 300B) est du type mâle et le moyen d'indexation angulaire complémentaire (5007) du moyeu central (500) est du type femelle.

7. Mécanisme à double embrayages (10) selon la revendication 6, dans lequel le moyen d'indexation angulaire (8107) est du type d'au moins une patte (8107) s'étendant radialement à l'extérieur de l'élément de rappel élastique (800A, 800B) correspondant, chaque patte (8107) collaborant avec une rainure (5007A) correspondante sur le moyeu central (500), la ou les rainures (5007A) formant collectivement le moyen d'indexation angulaire complémentaire (5007).

8. Mécanisme à double embrayages (10) selon la revendication 6, dans lequel le moyen d'indexation angulaire (8107) est du type d'au moins une patte (8107) s'étendant radialement à l'intérieur de l'élément de rappel élastique (800A, 800B) correspondant, chaque patte (8107) collaborant avec un trou (5007B) correspondant sur le moyeu central, le ou les trous (5007B) formant collectivement le moyen d'indexation angulaire complémentaire (5007).

9. Mécanisme à double embrayages (10) selon la revendication 6, dans lequel le moyen d'indexation angulaire (8107) est du type d'au moins un rivet extrudé s'étendant axialement au-delà de l'élément de rappel élastique (800A, 800B) en direction du moyeu central (500) et le moyen d'indexation angulaire complémentaire (5007) est du type d'au moins un alésage axial.

10. Mécanisme à double embrayages (10) selon l'une quelconque des revendications 6 à 9, dans lequel le moyen d'indexation angulaire (8107) et le moyen d'indexation angulaire complémentaire (5007) sont respectivement angulairement régulièrement répartis autour d'un axe longitudinal (O) du mécanisme à double embrayages (10).

11. Mécanisme à double embrayages (10) selon l'une quelconque des revendications 2 à 5, dans lequel le moyen d'indexation angulaire (8107) d'au moins un des systèmes d'actionnement (300A, 300B) est du type femelle et le moyen d'indexation angulaire complémentaire (5004) du moyeu central (500) est du type mâle.

12. Mécanisme à double embrayages (10) selon l'une quelconque des revendications précédentes, dans lequel le moyeu central (500) comprend un moyen de centrage de l'élément de rappel élastique (800A, 800B) d'au moins un des systèmes d'actionnement (300A, 300B) et par rapport à l'axe longitudinal (O).

13. Mécanisme à double embrayages (10) selon la revendication précédente prise en combinaison avec la revendication 7, dans lequel une face interne de l'au moins une patte (8107) forme le moyen de centrage sur un fond de la rainure (5007A) du moyeu central (500).

14. Mécanisme à double embrayages (10) selon l'une quelconque des revendications 3 à 13, dans lequel la deuxième pièce annulaire (820) et une extrémité intérieure du piston (105, 205) d'au moins un des systèmes d'actionnement (300A, 300B) sont fixés solidairement ensembles ou forment une seule et même pièce.

15. Mécanisme à double embrayages (10) selon l'une quelconque des revendications 2 à 14, dans lequel le moyen d'indexation angulaire complémentaire (5007) du moyeu central (500) est commun avec le moyen d'indexation angulaire (8107) des premier et deuxième éléments de rappel élastique (800A, 800B).

## Patentansprüche

1. Doppelkupplungsmechanismus (10), der enthält:
- eine erste Kupplung (100) und eine zweite Kupplung (200), die um eine Mittelnabe (500) drehen;
- ein erstes Betätigungssystem (300A), das eingerichtet ist, um die erste Kupplung (100) einzurücken oder auszurücken;
- ein zweites Betätigungssystem (300B), das eingerichtet ist, um die zweite Kupplung (200) einzurücken oder auszurücken, wobei jedes Betätigungssystem (300A, 300B) enthält:
∘ eine Druckkammer (750A, 750B), die eingerichtet ist, um ein Druckfluid zu empfangen;
∘ einen Kolben (105, 205), der in der Druckkammer (750A, 750B) axial beweglich ist und sich radial außerhalb der Druckkammer (750A, 750B) erstreckt, um die entsprechende Kupplung (100, 200) einzurücken oder auszurücken;
∘ eine Ausgleichskammer (700A, 700B), die sich bezüglich des Kolbens (105, 205) entgegengesetzt zur Druckkammer (750A, 750B) befindet,
∘ ein in der Ausgleichskammer untergebrachtes elastisches Rückstellelement (800A, 800B), wobei das elastische Rückstellelement (800A, 800B) sich zwischen dem entsprechenden Kolben (105, 205) und der Mittelnabe (500) erstreckt, wobei das elastische Rückstellelement (800A, 800B) eingerichtet ist, um eine axiale Kraft gegen den Kolben (105, 205) auszuüben; wobei das elastische Rückstellelement eine Vielzahl von Öffnungen (8104) enthält;
**dadurch gekennzeichnet, dass** in jedem Betätigungssystem (300A, 300B) die Vielzahl von Öffnungen (8104) direkt in eine Vielzahl komplementärer Öffnungen (5004) mündet, die auf der Mittelnabe (500) hergestellt sind, um eine Fluidverbindung zwischen einem Fluidzirkulationskanal der Mittelnabe (500) und der Ausgleichskammer (700A, 700B) zu erlauben.

2. Doppelkupplungsmechanismus (10) nach dem vorhergehenden Anspruch, wobei das elastische Rückstellelement (800A, 800B) mindestens eines der Betätigungssysteme (300A, 300B) eine Winkelindexierungseinrichtung (8107) enthält, die mit einer auf der Mittelnabe (500) befindlichen komplementären Winkelindexierungseinrichtung (5007) zusammenwirkt.

3. Doppelkupplungsmechanismus (10) nach dem vorhergehenden Anspruch, wobei das elastische Rückstellelement (800A, 800B) mindestens eines Betätigungssystems (300A, 300B) enthält:
- ein erstes ringförmiges Bauteil (810), das dazu bestimmt ist, sich gegen eine Wand (5002) der Mittelnabe (500) anzulegen, wobei das erste ringförmige Bauteil (8101) die Winkelindexierungseinrichtung (8107) enthält;
- ein zweites ringförmiges Bauteil (820), das dazu bestimmt ist, sich gegen den entsprechenden Kolben (105, 205) anzulegen;
- eine Vielzahl elastischer Elemente (830), die sich zwischen dem ersten ringförmigen Bauteil (810) und dem zweiten ringförmigen Bauteil (820) erstrecken.

4. Doppelkupplungsmechanismus (10) nach dem vorhergehenden Anspruch, wobei die Vielzahl elastischer Elemente (830) von der Art einer Vielzahl von Schraubenfedern ist.

5. Doppelkupplungsmechanismus (10) nach dem vorhergehenden Anspruch, wobei die Vielzahl von im ersten ringförmigen Bauteil (810) geformten Öffnungen (8104) winkelmäßig zwischen den Schraubenfedern verteilt ist.

6. Doppelkupplungsmechanismus (10) nach einem der Ansprüche 2 bis 5, wobei die Winkelindexierungseinrichtung (8107) mindestens eines der Betätigungssysteme (300A, 300B) vom Steckertyp ist und die komplementäre Winkelindexierungseinrichtung (5007) der Mittelnabe (500) vom Buchsentyp ist.

7. Doppelkupplungsmechanismus (10) nach Anspruch 6, wobei die Winkelindexierungseinrichtung (8107) von der Art mindestens einer Klaue (8107) ist, die sich radial außerhalb des entsprechenden elastischen Rückstellelements (800A, 800B) erstreckt, wobei jede Klaue (8107) mit einer entsprechenden Rille (5007A) auf der Mittelnabe (500) zusammenwirkt, wobei die Rille oder die Rillen (5007A) gemeinsam die komplementäre Winkelindexierungseinrichtung (5007) formen.

8. Doppelkupplungsmechanismus (10) nach Anspruch 6, wobei die Winkelindexierungseinrichtung (8107) von der Art mindestens einer Klaue (8107) ist, die sich radial innerhalb des entsprechenden elastischen Rückstellelements (800A, 800B) erstreckt, wobei jede Klaue (8107) mit einem entsprechenden Loch (5007B) auf der Mittelnabe zusammenwirkt, wobei das Loch oder die Löcher (5007B) gemeinsam die komplementäre Winkelindexierungseinrichtung (5007) formen.

9. Doppelkupplungsmechanismus (10) nach Anspruch 6, wobei die Winkelindexierungseinrichtung (8107) von der Art mindestens eines extrudierten Niets ist, der sich axial über das elastische Rückstellelement (800A, 800B) hinaus in Richtung der Mittelnabe (500) erstreckt, und die komplementäre Winkelindexierungseinrichtung (5007) von der Art mindestens einer axialen Bohrung ist.

10. Doppelkupplungsmechanismus (10) nach einem der Ansprüche 6 bis 9, wobei die Winkelindexierungseinrichtung (8107) und die komplementäre Winkelindexierungseinrichtung (5007) je winkelmäßig gleichmäßig um eine Längsachse (O) des Doppelkupplungsmechanismus (10) verteilt sind.

11. Doppelkupplungsmechanismus (10) nach einem der Ansprüche 2 bis 5, wobei die Winkelindexierungseinrichtung (8107) mindestens eines der Betätigungssysteme (300A, 300B) vom Buchsentyp und die komplementäre Winkelindexierungseinrichtung (5004) der Mittelnabe (500) vom Steckertyp ist.

12. Doppelkupplungsmechanismus (10) nach einem der vorhergehenden Ansprüche, wobei die Mittelnabe (500) eine Zentriereinrichtung des elastischen Rückstellelements (800A, 800B) mindestens eines der Betätigungssysteme (300A, 300B) und bezüglich der Längsachse (O) enthält.

13. Doppelkupplungsmechanismus (10) nach dem vorhergehenden Anspruch in Kombination mit Anspruch 7, wobei eine Innenseite der mindestens einen Klaue (8107) die Zentriereinrichtung auf einem Boden der Rille (5007A) der Mittelnabe (500) bildet.

14. Doppelkupplungsmechanismus (10) nach einem der Ansprüche 3 bis 13, wobei das zweite ringförmige Bauteil (820) und ein inneres Ende des Kolbens (105, 205) mindestens eines der Betätigungssysteme (300A, 300B) fest miteinander verbunden befestigt sind oder ein einziges Bauteil bilden.

15. Doppelkupplungsmechanismus (10) nach einem der Ansprüche 2 bis 14, wobei die komplementäre Winkelindexierungseinrichtung (5007) der Mittelnabe (500) gemeinsam mit der Winkelindexierungseinrichtung (8107) der ersten und zweiten elastischen Rückstellelemente (800A, 800B) ist.

## Claims

1. Dual-clutch mechanism (10) comprising:
- a first clutch (100) and a second clutch (200) rotating about a central hub (500);
- a first actuation system (300A) arranged to engage or disengage the first clutch (100);
- a second actuation system (300B) arranged to engage or disengage the second clutch (200), each actuation system (300A, 300B) comprising:
∘ a pressure chamber (750A, 750B) arranged to receive a pressurized fluid;
∘ a piston (105, 205) movable axially in the pressure chamber (750A, 750B) and extending radially outside the pressure chamber (750A, 750B) in order to engage or to disengage the corresponding clutch (100, 200);
∘ a balancing chamber (700A, 700B) situated on the opposite side of the pressure chamber (750A, 750B) with respect to the piston (105, 205),
∘ an elastic return element (800A, 800B) housed in the balancing chamber, said elastic return element (800A, 800B) extending between the corresponding piston (105, 205) and the central hub (500), said elastic return element (800A, 800B) being arranged to exert an axial force against said piston (105, 205); said elastic return element comprising a plurality of openings (8104) ;
**characterized in that**, in each actuation system (300A, 300B), said plurality of openings (8104) opens directly into a plurality of complementary openings (5004) made in the central hub (500) in order to allow fluid communication between a fluid circulation duct of the central hub (500) and the balancing chamber (700A, 700B).

2. Dual-clutch mechanism (10) according to the preceding claim, in which the elastic return element (800A, 800B) of at least one of the actuation systems (300A, 300B) comprises an angular indexing means (8107) collaborating with a complementary angular indexing means (5007) situated on the central hub (500).

3. Dual-clutch mechanism (10) according to the preceding claim, in which the elastic return element (800A, 800B) of at least one actuation system (300A, 300B) comprises:
- a first annular part (810) intended to bear against a wall (5002) of the central hub (500), the first annular part (8101) comprising the angular indexing means (8107);
- a second annular part (820) intended to bear against the corresponding piston (105, 205);
- a plurality of elastic elements (830) extending between the first annular part (810) and the second annular part (820).

4. Dual-clutch mechanism (10) according to the preceding claim, in which the plurality of elastic elements (830) is of the type with a plurality of helical springs.

5. Dual-clutch mechanism (10) according to the preceding claim, in which the plurality of openings (8104) formed in the first annular part (810) are angularly distributed between the helical springs.

6. Dual-clutch mechanism (10) according to any one of Claims 2 to 5, in which the angular indexing means (8107) of at least one of the actuation systems (300A, 300B) is of the male type and the complementary angular indexing means (5007) of the central hub (500) is of the female type.

7. Dual-clutch mechanism (10) according to Claim 6, in which the angular indexing means (8107) is of the type with at least one tab (8107) extending radially outside the corresponding elastic return element (800A, 800B), each tab (8107) collaborating with a corresponding groove (5007A) on the central hub (500), the groove(s) (5007A) collectively forming the complementary angular indexing means (5007).

8. Dual-clutch mechanism (10) according to Claim 6, in which the angular indexing means (8107) is of the type with at least one tab (8107) extending radially inside the corresponding elastic return element (800A, 800B), each tab (8107) collaborating with a corresponding hole (5007B) on the central hub, the hole(s) (5007B) collectively forming the complementary angular indexing means (5007).

9. Dual-clutch mechanism (10) according to Claim 6, in which the angular indexing means (8107) is of the type with at least one extruded rivet extending axially beyond the elastic return element (800A, 800B) in the direction of the central hub (500), and the complementary angular indexing means (5007) is of the type with at least one axial bore.

10. Dual-clutch mechanism (10) according to any one of Claims 6 to 9, in which the angular indexing means (8107) and the complementary angular indexing means (5007) are respectively angularly uniformly distributed about a longitudinal axis (O) of the dual-clutch mechanism (10).

11. Dual-clutch mechanism (10) according to any one of Claims 2 to 5, in which the angular indexing means (8107) of at least one of the actuation systems (300A, 300B) is of the female type and the complementary angular indexing means (5004) of the central hub (500) is of the male type.

12. Dual-clutch mechanism (10) according to any one of the preceding claims, in which the central hub (500) comprises a means for centring the elastic return element (800A, 800B) of at least one of the actuation systems (300A, 300B) and with respect to the longitudinal axis (O).

13. Dual-clutch mechanism (10) according to the preceding claim taken in combination with Claim 7, in which an inner face of the at least one tab (8107) forms the means for centring on a bottom of the groove (5007A) of the central hub (500).

14. Dual-clutch mechanism (10) according to any one of Claims 3 to 13, in which the second annular part (820) and an inner end of the piston (105, 205) of at least one of the actuation systems (300A, 300B) are fastened securely together or form one and the same part.

15. Dual-clutch mechanism (10) according to any one of Claims 2 to 14, in which the complementary angular indexing means (5007) of the central hub (500) is common with the angular indexing means (8107) of the first and second elastic return elements (800A, 800B) .
